# EUROPEAN PATENT APPLICATION

(11) **EP 4 598 006 A1**
(43) Date of publication of application: **06.08.2025**
(21) Application number: 23871404.2
(22) Date of filing: 24.07.2023
(51) Int. Cl.: H04N 5/92, G06F 21/64, H04N 5/76, H04N 23/60

(54) **IMAGE FILE CREATION METHOD, IMAGE FILE, IMAGE FILE CREATION DEVICE, AND PROGRAM**

(30) Priority: 29.09.2022 JP 2022156885
(71) Applicant: FUJIFILM Corporation, Tokyo 106-8620 (JP)
(72) Inventor: KOBAYASHI, Toshiki, Saitama-shi, Saitama 331-9624 (JP); KOBAYASHI, Masaru, Saitama-shi, Saitama 331-9624 (JP); YAMAJI, Kei, Saitama-shi, Saitama 331-9624 (JP); NISHIO, Yuya, Saitama-shi, Saitama 331-9624 (JP)
(74) Representative: Dehns Germany Partnerschaft mbB
(86) International application number: PCT/JP2023/026993
(87) International publication number: WO 2024/070161

(57) **Abstract**

An image file creation method includes: an acquisition step of acquiring recording information including accessory information that is recordable in a first recording region of an image file or derived information that is derived from the accessory information; and a recording step of recording the recording information in a second recording region of the image file.

## Description

### BACKGROUND OF THE INVENTION

### 1. Field of the Invention

The present disclosed technology relates to an image file creation method, an image file, an image file creation apparatus, and a program.

### 2. Description of the Related Art

JP2019-041192A discloses an information processing apparatus. In the information processing apparatus disclosed in JP2019-041192A, Exif information of latitude, longitude, and azimuth is stored in an APP1 region of image data. The information processing apparatus includes an operation unit. The operation unit acquires object information relating to the Exif information stored in the APP1 region, and generates metadata described in JSON based on the object information. In addition, the operation unit stores the generated metadata in an APP 11 region of the image data.

JP2009-225229A discloses an image file creation method. The image file creation method disclosed in JP2009-225229A includes processing of generating first imaging information and second imaging information that is more detailed than the first imaging information based on imaging conditions, processing of converting the second imaging information into encrypted third imaging information, and processing of generating an image file in which the first imaging information and the third imaging information are added to image data obtained by imaging.

### SUMMARY OF THE INVENTION

One embodiment according to the present disclosed technology provides an image file creation method, an image file, an image file creation apparatus, and a program, which can improve convenience of an image file.

A first aspect according to the present disclosed technology relates to an image file creation method comprising: an acquisition step of acquiring recording information including accessory information that is recordable in a first recording region of an image file or derived information that is derived from the accessory information; and a recording step of recording the recording information in a second recording region of the image file.

A second aspect according to the present disclosed technology relates to an image file comprising: a first recording region in which accessory information is recordable; and a second recording region, in which recording information including the accessory information or derived information that is derived from the accessory information is recorded in the second recording region.

A third aspect according to the present disclosed technology relates to an image file creation apparatus comprising: a processor, in which the processor is configured to: acquire recording information including accessory information that is recordable in a first recording region of an image file or derived information that is derived from the accessory information; and record the recording information in a second recording region of the image file.

A fourth aspect according to the present disclosed technology relates to a program causing a computer to execute a process comprising: an acquisition step of acquiring recording information including accessory information that is recordable in a first recording region of an image file or derived information that is derived from the accessory information; and a recording step of recording the recording information in a second recording region of the image file.

### BRIEF DESCRIPTION OF THE DRAWINGS

Fig. 1 is a conceptual diagram showing an example of an aspect in which an imaging apparatus is used.
Fig. 2 is a block diagram showing an example of a hardware configuration of an electric system of the imaging apparatus and functions of main units thereof.
Fig. 3 is a conceptual diagram showing an example of a correlation between an image sensor and an acquisition unit.
Fig. 4 is a conceptual diagram showing an example of a correlation between the acquisition unit and a recording unit.
Fig. 5 is a conceptual diagram showing an example of a correlation between an NVM, an image file, and an encryption unit.
Fig. 6 is a conceptual diagram showing an example of a correlation between the encryption unit and the recording unit.
Fig. 7 is a flowchart showing an example of a flow of image file creation processing according to an embodiment.
Fig. 8 is a conceptual diagram showing an example of an aspect in which recording time point information is recorded in a second recording region of an image file.
Fig. 9 is a conceptual diagram showing an example of an aspect in which history information is recorded in the second recording region of the image file.
Fig. 10 is a conceptual diagram showing an example of an aspect in which subject distance information or subject position information is recorded in the second recording region of the image file.
Fig. 11 is a conceptual diagram showing an example of an aspect in which, in the second recording region of the image file, imaging condition information and the subject distance information are recorded as associated information, and the subject distance information, azimuth information, imaging apparatus position information, and the subject position information are recorded in association with each other.
Fig. 12 is a conceptual diagram showing an example of an aspect in which accessory information is recorded in a first recording region of the image file in accordance with a recording instruction issued to the imaging apparatus.
Fig. 13 is a conceptual diagram showing an example of an aspect in which even information that is not permitted to be recorded in the first recording region of the image file among a plurality of pieces of information included in the accessory information is recorded in the first recording region in accordance with an instruction issued to the imaging apparatus.
Fig. 14 is a conceptual diagram showing an example of an aspect in which a hash value used for encryption in the encryption unit is recorded in the second recording region of the image file.
Fig. 15 is a conceptual diagram showing an example of an aspect in which re-encrypted information obtained by encrypting encrypted information (for example, a hash value) with a private key, a URL for specifying a place in which a public key is stored, and a hash function used to generate the encrypted information are recorded in the second recording region of the image file.
Fig. 16 is a conceptual diagram showing an example of an aspect in which designated information among a plurality of pieces of information in first accessory information recorded in the first recording region of the image file is divided and recorded in the second recording region of the image file.
Fig. 17 is a conceptual diagram showing a form example in which image file creation processing is performed by an external apparatus in response to a request from the imaging apparatus, and a processing result is received by the imaging apparatus.
Fig. 18 is a conceptual diagram showing an example of a structure of an image file in a JPEG format.

### DESCRIPTION OF THE PREFERRED EMBODIMENTS

Hereinafter, an example of embodiments of an image file creation method, an image file, an image file creation apparatus, and a program according to the present disclosed technology will be described with reference to the accompanying drawings.

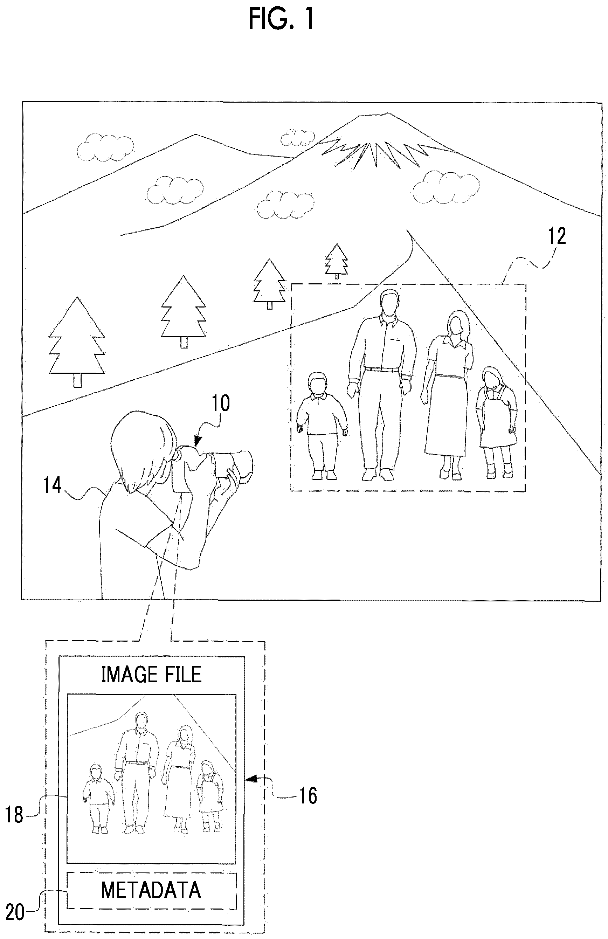

As shown in Fig. 1 as an example, an imaging apparatus 10 images an imaging target region 12 that is designated as a subject. The imaging target region 12 is determined by an angle of view designated by a user of the imaging apparatus 10 (hereinafter referred to as "user"). In the example shown in Fig. 1, a plurality of persons, a road, and the like are included in the imaging target region 12. The imaging apparatus 10 is an example of an "image file creation apparatus" according to the present disclosed technology.

The imaging apparatus 10 images the imaging target region 12 in response to an instruction issued from a photographer 14 to generate an image file 16. Examples of the file format of the image file 16 include a joint photographic experts group (JPEG). However, this is merely an example, and any file format for a still image, such as a tag image file format (TIFF), need only be used.

The image file 16 includes image data 18 indicating an image in which the imaging target region 12 is shown, and metadata 20 for the image data 18. The metadata 20 is data relating to the image data 18 and includes data in an exchangeable image file format (Exif format). The image file 16 is an example of an "image file" according to the present disclosed technology.

The imaging apparatus 10 is a consumer digital camera. Examples of the consumer digital camera include a lens-interchangeable digital camera and a lens-fixed digital camera. The consumer digital camera is merely an example, and the technology of the present disclosure is also established even in a case in which the imaging apparatus 10 is an industrial digital camera. Further, the present disclosed technology is also established even in a case in which the imaging apparatus 10 is an imaging apparatus mounted in various electronic apparatuses such as a drive recorder, a smart device, a wearable terminal, a cell observation device, an ophthalmic observation device, and a surgical microscope. Further, the present disclosed technology is also established even in a case in which the imaging apparatus 10 is an imaging apparatus mounted in various modalities such as an endoscope apparatus, an ultrasound diagnostic apparatus, an X-ray imaging apparatus, a computed tomography (CT) apparatus, and a magnetic resonance imaging (MRI) apparatus. In addition, the imaging apparatus 10 may be a virtual camera that acquires the image data 18 in a virtual reality (VR) space.

The image file 16 may be exchanged between a plurality of persons including the photographer 14 (for example, a plurality of persons to whom the authority to use the image file 16 is granted). Examples of the method of exchanging the image file 16 include a method of exchanging the image file 16 via a network such as a wide area network (WAN) or a local area network (LAN), and a method of exchanging the image file 16 via a portable storage medium such as a universal serial bus (USB) memory.

By the way, in recent years, with an increase in the frequency of use of artificial intelligence (AI), there has been an increasing demand for writing information for annotation in the image file. The information for annotation is information in a binary format or information in a text format created based on the information in the binary format. In the known image file in the related art, for example, an APP1 region is prepared as a recording region in which the information in the binary format is recorded. Currently, it is required to freely handle the information for annotation in a state in which the information in the binary format recorded in the APP1 region is secured as it is. In addition, at the same time, it is also required to ensure the security and the authenticity of the information for annotation. However, the known image file in the related art does not have a mechanism that is convenient enough to sufficiently meet these demands. For example, a main part of the APP1 region is a mechanism in which information is written in the binary format, and only predetermined specific information can be entered, so that the APP1 region is not suitable for a region in which information having a high degree of freedom remains.

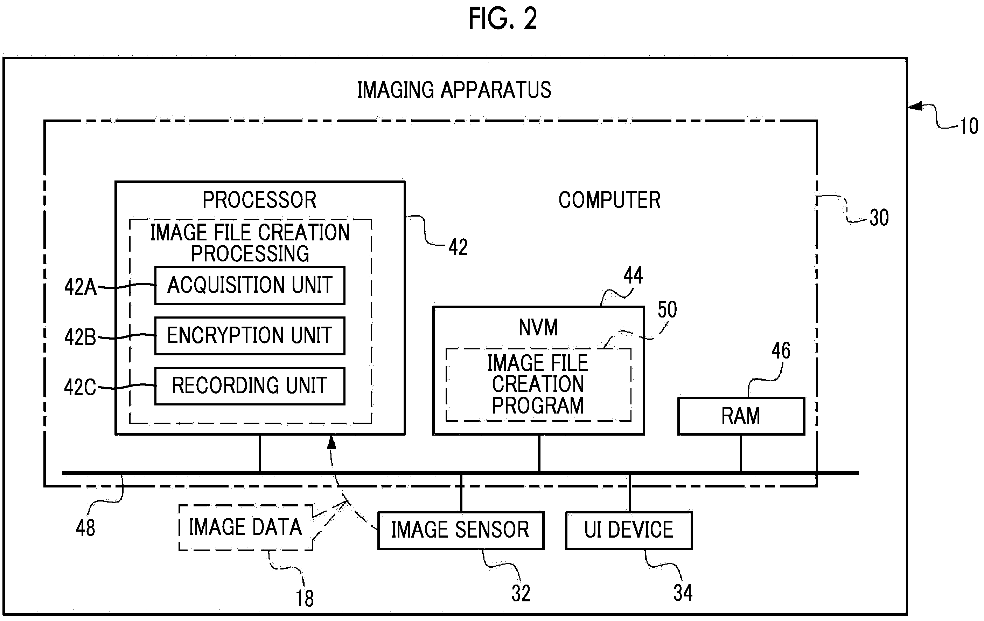

Therefore, in view of such circumstances, in the present embodiment, the imaging apparatus 10 performs image file creation processing (see Fig. 2 and subsequent drawings). Hereinafter, the description will be made in detail with reference to Fig. 2 and subsequent drawings.

As shown in Fig. 2 as an example, the imaging apparatus 10 comprises a computer 30, an image sensor 32, and a user interface (UI) system device 34. The computer 30 is an example of a "computer" according to the present disclosed technology.

The computer 30 comprises a processor 42, a non-volatile memory (NVM) 44, and a random-access memory (RAM) 46. The processor 42, the NVM 44, and the RAM 46 are connected to a bus 48. The processor 42 is an example of a "processor" according to the present disclosed technology.

The processor 42 is a processing device including a digital signal processor (DSP), a central processing unit (CPU), and a graphics processing unit (GPU), and the DSP and the GPU operate under control of the CPU and are responsible for execution of processing relating to the image. Here, as an example of the processor 42, the processing device including the DSP, the CPU, and the GPU has been described, but this is merely an example, and the processor 42 may be one or more CPUs and one or more GPUs, may be one or more CPUs and a DSP with integrated GPU functions, may be one or more CPUs and a DSP without integrated the GPU functions, or may be equipped with a tensor processing unit (TPU).

The NVM 44 is a non-volatile storage device that stores various programs, various parameters, and the like. Examples of the NVM 44 include a flash memory (for example, electrically erasable and programmable read-only memory (EEPROM)). The RAM 46 is a memory in which information is temporarily stored, and is used as a work memory by the processor 42. Examples of the RAM 46 include a dynamic random-access memory (DRAM) and a static random-access memory (SRAM).

The image sensor 32 is connected to the bus 48. Examples of the image sensor 32 include a complementary metal-oxide-semiconductor (CMOS) image sensor. The image sensor 32 images the imaging target region 12 (see Fig. 1) under the control of the processor 42, to generate the image data 18.

Here, as an example of the image sensor 32, the CMOS image sensor has been described, but this is merely an example, and the image sensor 32 may be another type of image sensor such as a charge-coupled device (CCD) image sensor.

The NVM 44 stores an image file creation program 50. The image file creation program 50 is an example of a "program" according to the present disclosed technology. The processor 42 reads out the image file creation program 50 from the NVM 44 and executes the readout image file creation program 50 on the RAM 46, to perform the image file creation processing. The image file creation processing is an example of a "process" according to the present disclosed technology, and is implemented by the processor 42 operating as an acquisition unit 42A, an encryption unit 42B, and a recording unit 42C in accordance with the image file creation program 50 executed on the RAM 46.

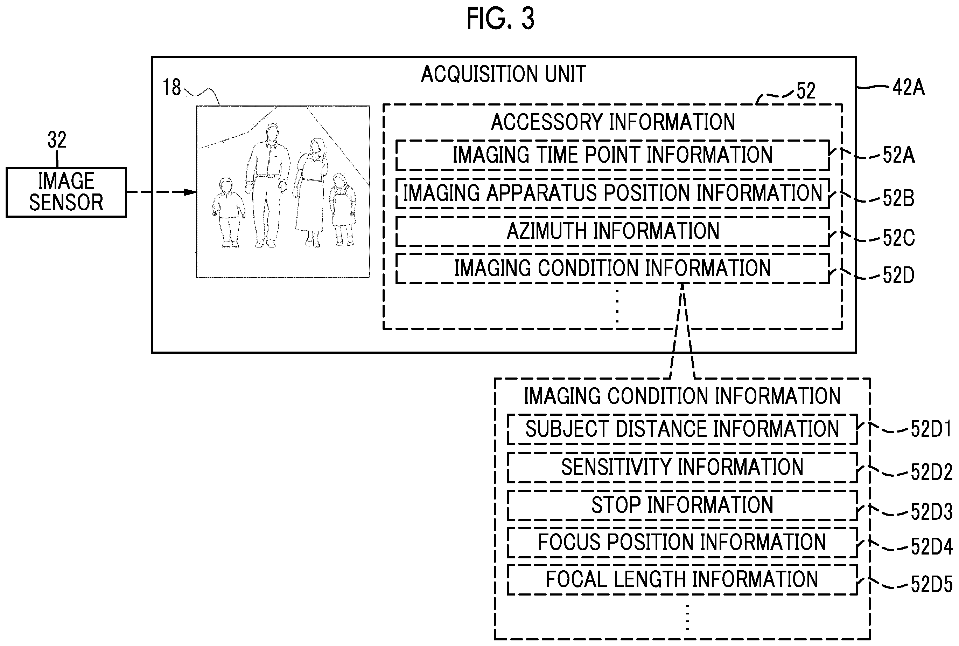

As shown in Fig. 3 as an example, the acquisition unit 42A acquires the image data 18 and accessory information 52. The acquisition unit 42A executes an imaging step and a first acquisition step. The imaging step is a step of acquiring, from the image sensor 32, the image data 18 obtained by performing the imaging via the image sensor 32. In addition, the first acquisition step is a step of acquiring the accessory information 52 associated with the image data 18, as one of the metadata 20 (see Fig. 1). The accessory information 52 is information in the binary format including the Exif information. Here, the first acquisition step is an example of an "acquisition step" according to the present disclosed technology. In addition, the accessory information 52 is an example of "accessory information" and "recording information" according to the present disclosed technology.

The accessory information 52 includes a plurality of tags. The tag is data in which the metadata 20 (Fig. 1) is divided into items. Examples of the item include an imaging time point, a position of the imaging apparatus 10, an azimuth of the imaging apparatus 10, and an imaging condition. Here, the imaging time point refers to a time point at which the imaging is performed by the imaging apparatus 10 in order to obtain the image data 18. In addition, the position of the imaging apparatus 10 refers to a position at which the imaging is performed by the imaging apparatus 10 in order to obtain the image data 18 (for example, the latitude and the longitude of the imaging apparatus 10 at a point in time at which the imaging is performed). In addition, the azimuth of the imaging apparatus 10 refers to an azimuth of an optical axis of a lens attached to the imaging apparatus 10. Further, the imaging condition refers to various conditions (for example, a subject distance, an ISO sensitivity, an F number, a focus position, and a focal length) used for the imaging.

The accessory information 52 includes, as the plurality of tags, imaging time point information 52A, imaging apparatus position information 52B, azimuth information 52C, and imaging condition information 52D. The imaging time point information 52A is information indicating the imaging time point. The imaging apparatus position information 52B is information indicating the position of the imaging apparatus 10. The azimuth information 52C is information indicating the azimuth of the imaging apparatus 10. The imaging condition information 52D is information indicating the imaging condition.

The imaging condition information 52D includes subject distance information 52D1, sensitivity information 52D2, stop information 52D3, focus position information 52D4, focal length information 52D5, and the like. The subject distance information 52D1 is information indicating the subject distance (for example, a distance from a light-receiving surface of the image sensor 32 to the imaging target region 12). The sensitivity information 52D2 is information indicating the ISO sensitivity. The stop information 52D3 is information relating to a stop (for example, information indicating the F number). The focus position information 52D4 is information indicating the focus position of a focus lens included in the lens attached to the imaging apparatus 10. The focal length information 52D5 is information indicating the focal length of the imaging apparatus 10.

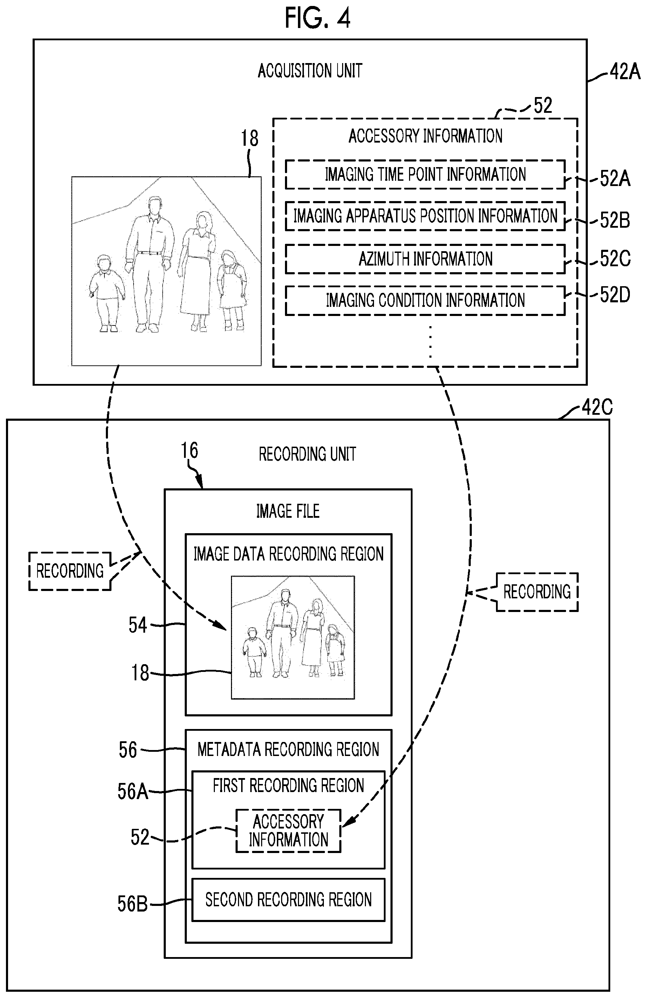

As shown in Fig. 4 as an example, the image file 16 includes an image data recording region 54 and a metadata recording region 56. The image data recording region 54 is a region in which the image data 18 is recorded. The metadata recording region 56 is a region in which the metadata 20 is recorded. The metadata recording region 56 includes a first recording region 56A and a second recording region 56B. The first recording region 56A is an example of a "first recording region" according to the present disclosed technology, and the second recording region 56B is an example of a "second recording region" according to the present disclosed technology.

The first recording region 56A is a region in which the information in the binary format is recorded, and the second recording region 56B is a region in which the information in the text format (for example, JavaScript (registered trademark) object notation (JSON) format) is recorded.

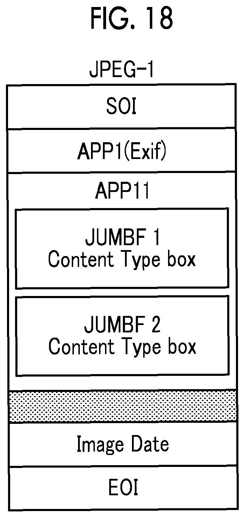

Here, examples of the first recording region 56A include an APP1 region in a file format of a JPEG format. Examples of the second recording region 56B include a recording region other than the APP1 region in the file format of the JPEG format. Examples of the recording region other than the APP1 region in the file format of the JPEG format include an APP11 region. The file format of the JPEG format including the APP1 region and the APP11 region will be described later with reference to Fig. 18.

The recording unit 42C records the image data 18 acquired by the acquisition unit 42A, in the image data recording region 54. The recording unit 42C executes a first recording step. The first recording step is an example of a "recording step" according to the present disclosed technology. The first recording step is a step of recording the accessory information 52 acquired by the acquisition unit 42A, in the first recording region 56A.

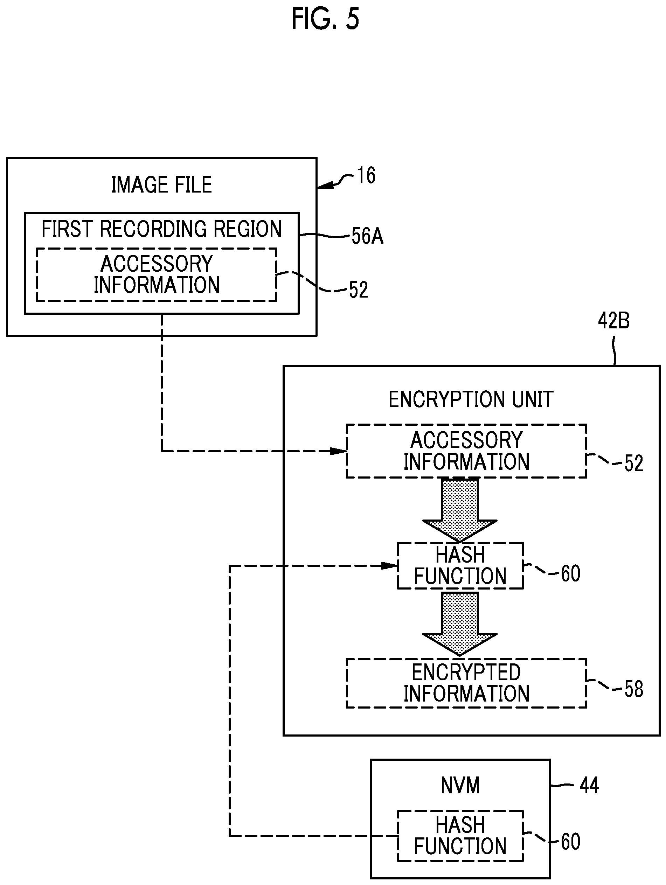

As shown in Fig. 5 as an example, the encryption unit 42B acquires encrypted information 58. The encryption unit 42B executes a second acquisition step. The second acquisition step is an example of an "acquisition step" according to the present disclosed technology. The second acquisition step is a step of acquiring the accessory information 52 from the first recording region 56A of the image file 16 and encrypting the acquired accessory information 52, to acquire the encrypted information 58 as information derived from the accessory information 52. The encrypted information 58 is an example of "derived information" and "encrypted information" according to the present disclosed technology.

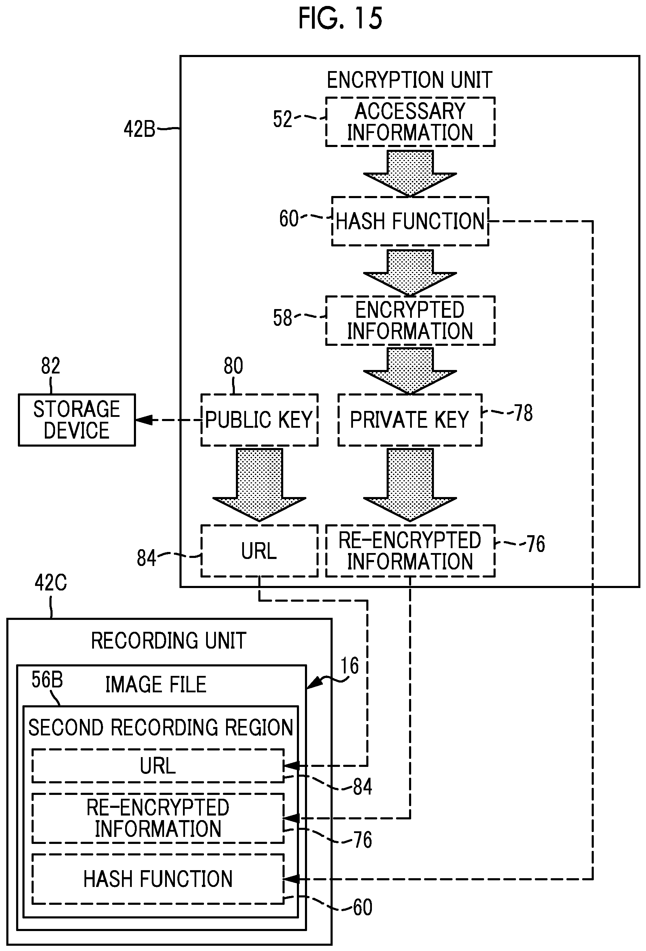

Examples of the encryption of the accessory information 52 include hashing using a hash function 60. In the present embodiment, the NVM 44 stores the hash function 60. Examples of the hash function 60 include SHA-256, SHA-384, and SHA-512. The encryption unit 42B acquires the hash function 60 from the NVM 44 and encrypts (that is, hashes) the accessory information 52 using the acquired hash function 60, to acquire the encrypted information 58 (that is, a hash value). Here, the encrypted information 58 is an example of a "hash value" according to the present disclosed technology. It should be noted that the encrypted information 58 may be re-encrypted information 76 obtained by further encrypting the hash value as shown in Fig. 15.

It is preferable that the encryption of the accessory information 52 is automatically executed after the acquisition unit 42A acquires the accessory information 52. In order to achieve this, for example, the encryption unit 42B synchronizes the end of the first acquisition step and the start of the second acquisition step (for example, the second acquisition step is started at a timing at which the first acquisition step ends), to continuously perform the first acquisition step and the second acquisition step. The reason for this is to prevent a third party (for example, a person who is not given the authority to use the image file 16) from having time to modify the accessory information 52, delete a portion of the accessory information 52, or encrypt the modified accessory information 52 or the accessory information 52 with a deleted portion.

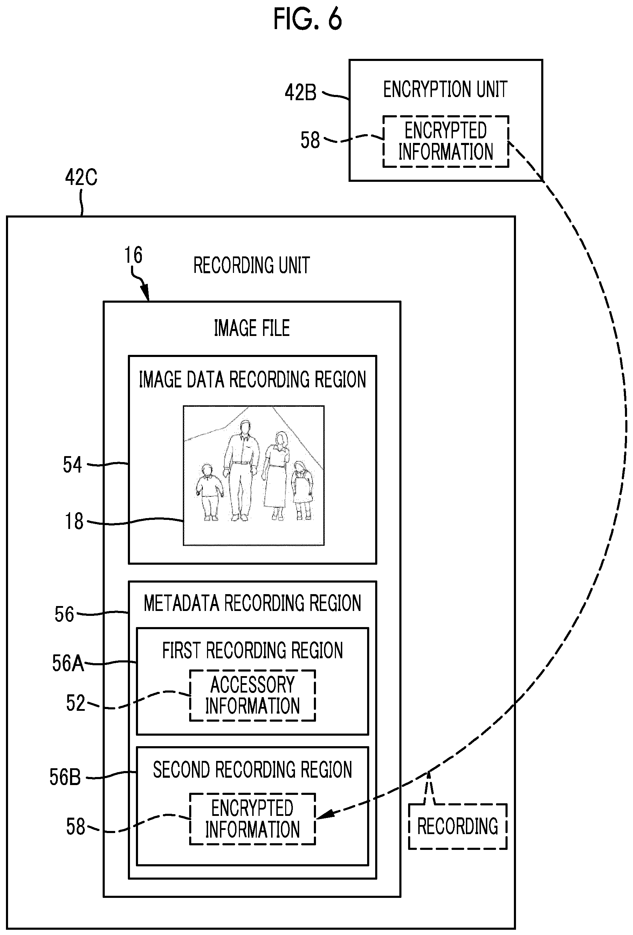

As shown in Fig. 6 as an example, the encrypted information 58 is recorded in the second recording region 56B. The recording unit 42C executes a second recording step. The second recording step is a step of recording the encrypted information 58 generated by the encryption unit 42B in the second recording region 56B of the image file 16, as one of the metadata 20. Here, the second recording step is an example of a "recording step" according to the present disclosed technology. In addition, the encrypted information 58 recorded in the second recording region 56B is an example of "recording information" according to the present disclosed technology.

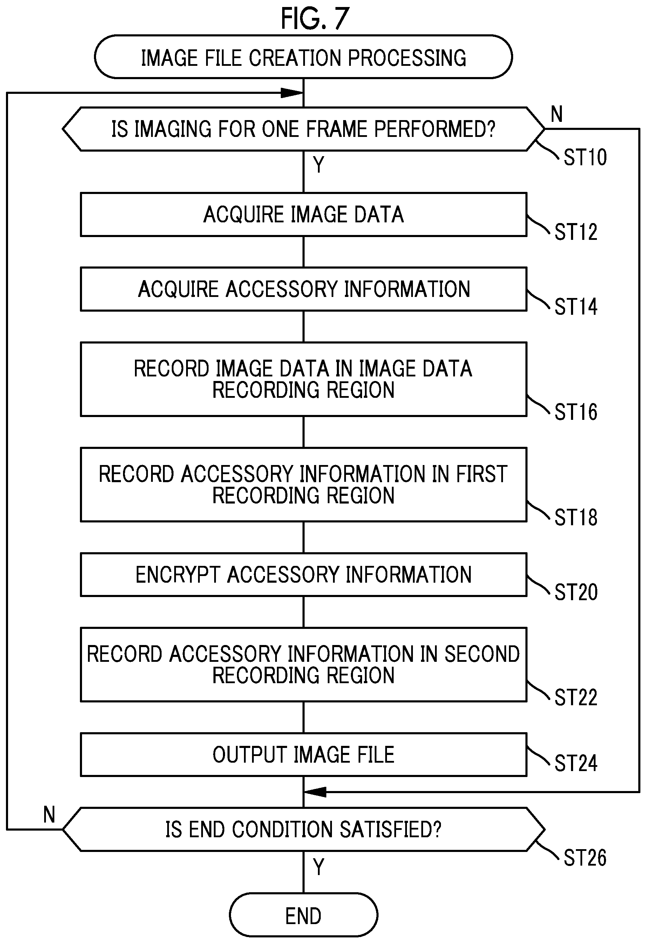

Next, an operation of a portion of the imaging apparatus 10 according to the present disclosed technology will be described with reference to Fig. 7.

Fig. 7 shows an example of a flow of the image file creation processing performed by the processor 42 of the imaging apparatus 10. The flow of the image file creation processing shown in the flowchart of Fig. 7 is an example of an "image file creation method" according to the present disclosed technology.

In the image file creation processing shown in Fig. 7, first, in step ST10, the acquisition unit 42A determines whether or not the imaging for one frame is performed by the image sensor 32. In step ST10, in a case in which the imaging for one frame (for example, imaging for a still image) is not performed by the image sensor 32, a determination result is No, and the image file creation processing proceeds to step ST26. In step ST10, in a case in which the imaging for one frame is performed by the image sensor 32, the determination result is Yes, and the first image file creation processing proceeds to step ST12.

In step ST12, the acquisition unit 42A acquires the image data 18 from the image sensor 32. After the processing of step ST12 is executed, the image file creation processing proceeds to step ST14.

In step ST14, the acquisition unit 42A acquires the accessory information 52 associated with the image data 18 acquired in step ST12. After the processing of step ST14 is executed, the image file creation processing proceeds to step ST16.

In step ST16, the recording unit 42C records the image data 18 acquired in step ST12, in the image data recording region 54 of the image file 16. After the processing of step ST16 is executed, the image file creation processing proceeds to step ST18.

In step ST18, the recording unit 42C records the accessory information 52 acquired in step ST14, in the first recording region 56A of the image file 16. After the processing of step ST18 is executed, the image file creation processing proceeds to step ST20.

In step ST20, the encryption unit 42B acquires the accessory information 52 from the first recording region 56A of the image file 16 and encrypts the acquired accessory information 52 using the hash function 60, to acquire the encrypted information 58. After the processing of step ST20 is executed, the image file creation processing proceeds to step ST22.

In step ST22, the recording unit 42C records the encrypted information 58 acquired in step ST20, in the second recording region 56B of the image file 16. After the processing of step ST22 is executed, the image file creation processing proceeds to step ST24.

In step ST24, the recording unit 42C outputs the image file 16 to a predetermined output destination. Examples of the predetermined output destination include an external apparatus (for example, a smart device, a personal computer, or a server) that is connected to the imaging apparatus 10 in a communicable manner, the NVM 44, and a printer.

In step ST26, the recording unit 42C determines whether or not an image file creation processing end condition is satisfied. Examples of the image file creation processing end condition include a condition in which a UI device 34 receives an instruction to end the image file creation processing. In step ST26, in a case in which the image file creation processing end condition is not satisfied, a determination result is No, and the image file creation processing proceeds to step ST10. In step ST26, in a case in which the image file creation processing end condition is satisfied, the determination result is Yes, and the image file creation processing ends.

As described above, in the imaging apparatus 10, the accessory information 52 is acquired, and the encrypted information 58 derived from the accessory information 52 is acquired. Then, the accessory information 52 is recorded in the first recording region 56A of the image file 16, and the encrypted information 58 is recorded in the second recording region 56B.

For example, the user (for example, the photographer 14 or an editor to whom the authority to use the image file 16 is granted) obtains the encrypted information 58 from the second recording region 56B of the image file 16 configured as described above, and obtains the accessory information 52 by decoding the encrypted information 58. The accessory information 52 obtained by the user is used by the user as information (for example, information for AI annotation) contributing to management, editing, or the like of the image file 16. As described above, since the encrypted information 58 is recorded in the second recording region 56B of the image file 16 and is used by the user for management, editing, or the like of the image file 16, the convenience of the image file 16 for the user is improved.

In addition, in the present embodiment, since the encrypted information 58 recorded in the second recording region 56B is information in which the accessory information 52 is encrypted, it is possible to achieve higher security than in a case in which the accessory information 52 is recorded in the second recording region 56B as it is.

In addition, in the present embodiment, for example, even in a case in which the encrypted information 58 is obtained by the user for management, editing, or the like of the image file 16, a state is maintained in which the accessory information 52 is recorded in the first recording region 56A of the image file 16. Therefore, the user can refer to or use the accessory information 52 recorded in the first recording region 56A in addition to the encrypted information 58 recorded in the first recording region 56B, in order to manage or edit the image file 16. As a result, the convenience of the accessory information 52 is improved.

In addition, in the present embodiment, the accessory information 52 is recorded in the first recording region 56A (here, as an example, the APP1 region) as the information in the binary format, and the encrypted information 58 is recorded in the second recording region 56B (here, as an example, the APP11 region) as the information in the text format. Therefore, it is possible to handle the encrypted information 58 derived from the accessory information 52 as the information in the text format in a state in which the accessory information 52 is secured in the first recording region 56A as the information in the binary format.

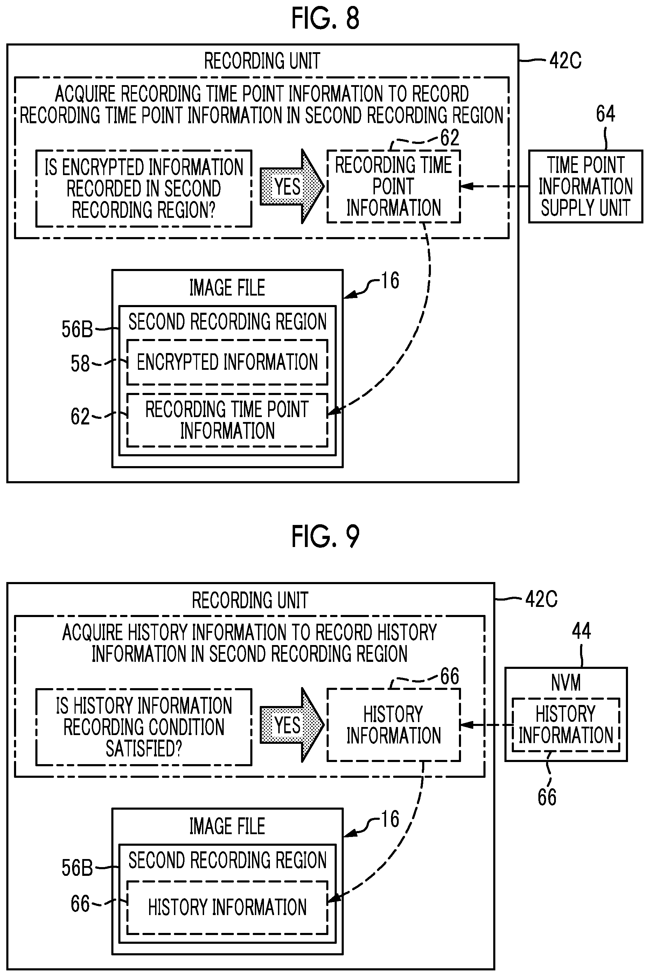

It should be noted that, in the above-described embodiment, the form example has been described in which the encrypted information 58 is recorded in the second recording region 56B, but the present disclosed technology is not limited to this. For example, as shown in Fig. 8, the recording unit 42C may execute a step of recording the recording time point information 62 in the second recording region 56B of the image file 16, as one of the steps included in the second recording step.

In order to achieve this, for example, first, the recording unit 42C determines whether or not the encrypted information 58 is recorded in the second recording region 56B. In a case in which it is determined that the encrypted information 58 is recorded in the second recording region 56B, the recording unit 42C acquires the recording time point information 62. The recording time point information 62 is information indicating a time point at which the encrypted information 58 is recorded in the second recording region 56B (in other words, the time point at which the recording unit 42C determines that the encrypted information 58 is recorded in the second recording region 56B). Here, the time point at which the encrypted information 58 is recorded in the second recording region 56B is an example of a "timing at which the recording information is recorded in the second recording region" according to the present disclosed technology. In addition, the recording time point information 62 is an example of "timing information" according to the present disclosed technology.

The recording time point information 62 is acquired from a time point information supply unit 64 by the recording unit 42C. The time point information supply unit 64 is, for example, a real time clock or a network mounted in the imaging apparatus 10, and supplies current time point information indicating a current time point to the recording unit 42C in response to a request from the recording unit 42C. The recording unit 42C records the current time point information supplied from the time point information supply unit 64, in the second recording region 56B of the image file, 16 as the recording time point information 62.

Accordingly, the user can easily understand the timing (here, as an example, the time point) at which the encrypted information 58 is recorded in the second recording region 56B of the image file 16. Further, the user can use the recording time point information 62 recorded in the second recording region 56B for managing or editing the image file 16.

Here, for convenience of description, the form example has been described in which the information indicating the time point at which the encrypted information 58 is recorded in the second recording region 56B is recorded in the second recording region 56B as the recording time point information 62, but this is merely an example. For example, information indicating a time point at which information (for example, information derived from the accessory information 52) other than the encrypted information 58 is recorded in the second recording region 56B may be recorded in the second recording region 56B in the same manner. In addition, information relating to a timing at which the second acquisition step ends, that is, a timing (for example, a time point) at which the accessory information 52 is encrypted may be recorded in the second recording region 56B, as one of pieces of the information derived from the accessory information 52.

In the above-described embodiment, the encrypted information 58 has been described as the information derived from the accessory information 52, but the present disclosed technology is not limited to this. For example, as shown in Fig. 9, the information derived from the accessory information 52 may be history information 66 relating to a change history of the accessory information 52.

In the example shown in Fig. 9, the NVM 44 stores the history information 66. Here, although the form example has been described in which the history information 66 is stored in the NVM 44, this is merely an example, and the history information 66 may be stored in a storage medium other than the NVM 44. Examples of the storage medium other than the NVM 44 include a storage medium provided in a device (for example, a smart device, a personal computer, or a server) that is connected to the imaging apparatus 10 in a communicable manner.

The history information 66 stored in the NVM 44 is updated by the processor 42 and the like each time the accessory information 52 is changed. Examples of the history information 66 include first history information, second history information, and third history information. The first history information is information in which the accessory information 52 before the change and the accessory information 52 after the change are associated with each other, and a change in the information is arranged in time series. The second history information is information in which information indicating a difference between the accessory information 52 before the change and the accessory information 52 after the change is arranged in time series. The third history information is information for specifying a time point at which the accessory information 52 is changed, the contents of the change in the accessory information 52, and the like. As described above, the history information 66 may be any information as long as information indicates the history in which the accessory information 52 is changed.

The recording unit 42C determines whether or not a condition for recording the history information 66 in the image file 16 (hereinafter, referred to as a "history information recording condition") is satisfied. A first example of the history information recording condition is a condition in which the history information 66 is updated. A second example of the history information recording condition is a condition in which an instruction to record the history information 66 in the image file 16 is received by the UI device 34.

In a case in which the recording unit 42C determines that the history information recording condition is satisfied, the recording unit 42C acquires the history information 66 from the NVM 44 and records the acquired history information 66 in the second recording region 56B of the image file 16. As a result, the user can easily understand the change history of the accessory information 52. Further, the user can use the history information 66 recorded in the second recording region 56B for management, editing, or the like of the image file 16.

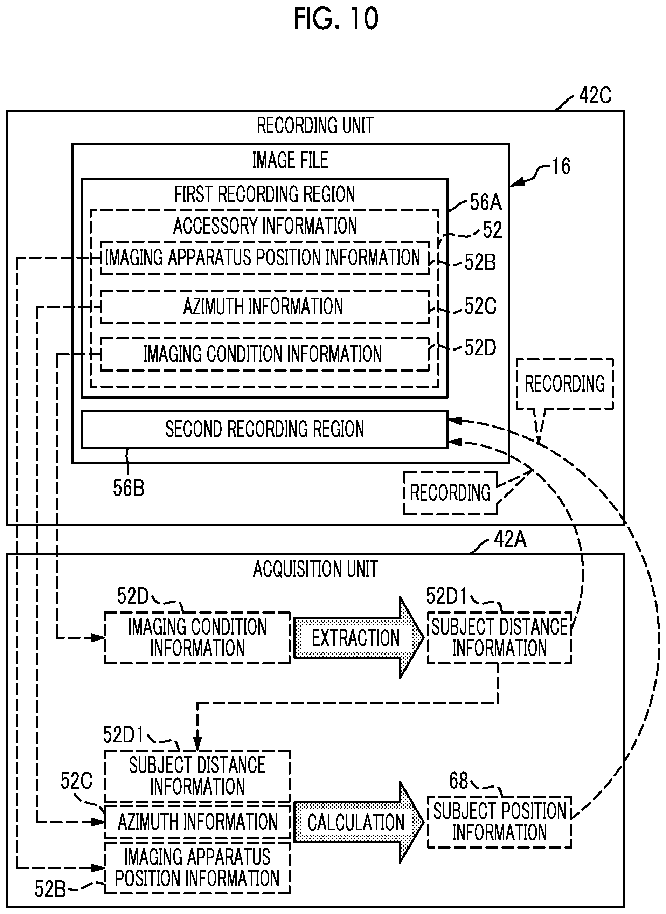

In the above-described embodiment, the form example has been described in which the encrypted information 58 obtained by encrypting the accessory information 52 is recorded in the second recording region 56B, but the present disclosed technology is not limited to this. For example, as shown in Fig. 10, the subject distance information 52D1 may be recorded in the second recording region 56B, or the subject position information 68 may be recorded in the second recording region 56B.

In the example shown in Fig. 10, the acquisition unit 42A acquires the imaging condition information 52D from the first recording region 56A of the image file 16, and extracts the subject distance information 52D1 from the acquired imaging condition information 52D. Then, the recording unit 42C records the subject distance information 52D1, which is extracted from the imaging condition information 52D by the acquisition unit 42A, in the second recording region 56B of the image file 16.

Accordingly, in the first recording region 56A, the subject distance information 52D1 can be comprehensively managed together with the other information included in the accessory information 52, and, in the second recording region 56B, the subject distance information 52D1 can be managed in a state of being separated from the accessory information 52 of the first recording region 56A. In addition, in the first recording region 56A, the subject distance information 52D1 can be managed as one item together with other information included in the imaging condition information 52D, and, in the second recording region 56B, the subject distance information 52D1 can be managed separately from the imaging condition information 52D.

It should be noted that, here, although the form example has been described in which the subject distance information 52D1 is recorded in the second recording region 56B, this is merely an example, and other information included in the accessory information 52 may be recorded in the second recording region 56B, or other information included in the imaging condition information 52D in the accessory information 52 may be recorded in the second recording region 56B. A plurality of pieces of information included in the accessory information 52 may be recorded in the second recording region 56B in a state of being divided for each designated category.

In the example shown in Fig. 10, the subject position information 68 is information indicating a position of the imaging target region 12 (here, as an example, the latitude and the longitude of the imaging target region 12), and is calculated by the acquisition unit 42A. The acquisition unit 42A acquires the imaging apparatus position information 52B and the azimuth information 52C from the first recording region 56A of the image file 16. The acquisition unit 42A calculates the subject position information 68 based on the subject distance information 52D1 extracted from the imaging condition information 52D, the imaging apparatus position information 52B, and the azimuth information 52C. The recording unit 42C records the subject position information 68 calculated by the acquisition unit 42A, in the second recording region 56B of the image file 16.

As described above, in the example shown in Fig. 10, the subject position information 68, which is information derived from the subject distance information 52D1, the imaging apparatus position information 52B, and the azimuth information 52C that are obtained by dividing the accessory information 52, is recorded in the second recording region 56B of the image file 16. The subject position information 68 is information that is not recorded in the first recording region 56A. Therefore, since the subject position information 68 recorded in the second recording region 56B is used by the user for management, editing, or the like of the image file 16 as the information that is not recorded in the first recording region 56A, the convenience of the image file 16 for the user is improved.

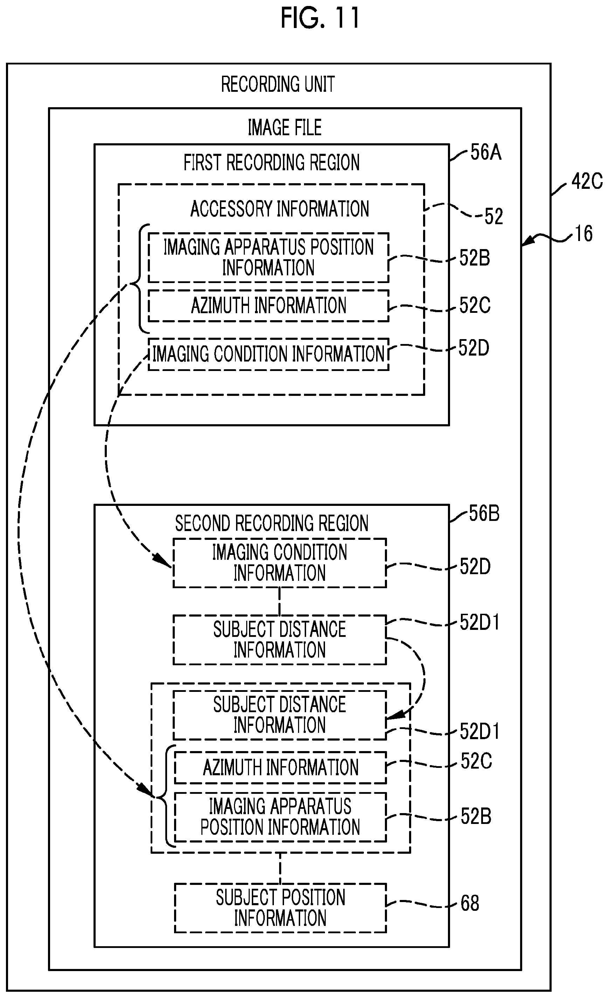

In the example shown in Fig. 10, the form example has been described in which the subject distance information 52D1 is recorded in the second recording region 56B without being associated with the other information, and the subject position information 68 is recorded in the second recording region 56B without being associated with the other information, but this is merely an example. For example, as shown in Fig. 11, the imaging condition information 52D used to obtain the subject distance information 52D1 and the subject distance information 52D1 may be recorded in the second recording region 56B in association with each other. The second recording region 56B may have a directory structure, and, in this case, for example, the imaging condition information 52D may be stored in a higher directory, and the subject distance information 52D1 may be stored in a lower directory than the imaging condition information 52D. In such a case, the imaging condition information 52D and the subject distance information 52D1 can be comprehensively managed in a state in which a master-slave relationship between the imaging condition information 52D and the subject distance information 52D1 can be understood.

In addition, in the same manner, the subject distance information 52D1, the azimuth information 52C, and the imaging apparatus position information 52B used to obtain the subject position information 68 and the subject position information 68 may be recorded in the second recording region 56B in association with each other. In such a case as well, for example, the subject distance information 52D1, the azimuth information 52C, and the imaging apparatus position information 52B may be stored in the higher directory, and the subject position information 68 may be stored in the lower directory than the subject distance information 52D1, the azimuth information 52C, and the imaging apparatus position information 52B. In such a case, the subject distance information 52D1, the azimuth information 52C, the imaging apparatus position information 52B, and the subject position information 68 can be comprehensively managed in a state in which a master-slave relationship between the subject distance information 52D1, the azimuth information 52C, and the imaging apparatus position information 52B and the subject position information 68 can be understood.

Here, the two-hierarchy directory has been described, but this is merely an example, and various types of information may be stored in a three-hierarchy or higher directory in accordance with a master-slave relationship of the various types of information. For example, since the subject position information 68 is information calculated based on the subject distance information 52D1, the imaging condition information 52D used to obtain the subject distance information 52D1 may be stored in a directory of a first hierarchy, the subject distance information 52D1 may be stored in a directory of a second hierarchy, and the subject position information 68 may be stored in a directory of a third hierarchy.

In the above-described embodiment, the form example has been described in which the accessory information 52 acquired by the acquisition unit 42A is unconditionally recorded in the first recording region 56A of the image file 16, but the present disclosed technology is not limited to this. For example, the accessory information 52 acquired by the acquisition unit 42A may be recorded in the first recording region 56A in response to the instruction received by the UI device 34.

In such a case, for example, in the imaging apparatus 10, a first reception step and a third recording step are executed. The first reception step is a step of receiving an instruction of whether or not to record the accessory information 52 in the first recording region 56A. The third recording step is a step of recording the accessory information 52 in the first recording region 56A in a case in which the instruction to record the accessory information 52 in the first recording region 56A is received in the first reception step. Here, the first reception step is an example of a "reception step" according to the present disclosed technology, and the third recording step is an example of a "recording step" according to the present disclosed technology.

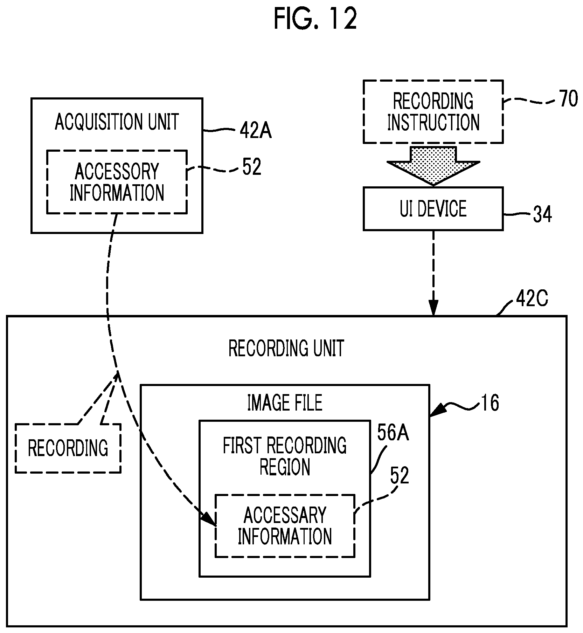

In the example shown in Fig. 12, in a case in which a recording instruction 70, which is the instruction to record the accessory information 52 in the first recording region 56A, is received by the UI device 34, the recording unit 42C records the accessory information 52 acquired by the acquisition unit 42Ain the first recording region 56A. Therefore, the accessory information 52 can be recorded in the first recording region 56A at a timing intended by the user.

In the example shown in Fig. 12, the form example has been described in which all pieces of the accessory information 52 are recorded in the first recording region 56A, but this is merely an example. For example, a plurality of pieces of information (for example, the imaging time point information 52A, the imaging apparatus position information 52B, the azimuth information 52C, the imaging condition information 52D, or the subject distance information 52D1 included in the imaging condition information 52D) included in the accessory information 52 may be designated by the user via the UI device 34, and the designated information may be recorded in the second recording region 56B. Here, the plurality of pieces of information are an example of a "plurality of pieces of the recording information" according to the present disclosed technology.

It should be noted that the designated information need not be recorded in the first recording region 56A. In a case in which the designated information is not recorded in the first recording region 56A, the capacity of the image file 16 can be reduced. In addition, the information required by the user among pieces of the accessory information 52, which has been recorded in the first recording region 56A in the related art, can be recorded in the second recording region 56B having a high degree of freedom of description. In addition, by recording the derived information (for example, the encrypted information 58, the recording time point information 62, the history information 66, and the subject position information 68) that has not been recorded in the first recording region 56A in the second recording region 56B in the related art, important information is aggregated in the second recording region 56B, and the convenience of the image file 16 is improved.

A plurality of pieces of information (for example, one or more pieces of information divided by the item designated by the user) summarized in units of the items designated by the user from the accessory information 52 may be recorded in the first recording region 56A, or may be recorded in the second recording region 56B. In this way, by recording the information designated by the user in the first recording region 56A or the second recording region 56B, the convenience of the image file 16 for the user is improved.

In the example shown in Fig. 12, the form example has been described in which all pieces of the accessory information 52 are recorded in the first recording region 56A by the recording unit 42C in a case in which the recording instruction 70 is received by the UI device 34, but the present disclosed technology is not limited to this. For example, even information that is determined as the information not to be recorded in the first recording region 56A among the plurality of pieces of information included in the accessory information 52 may be recorded in the second recording region 56B in response to the instruction received by the UI device 34.

In such a case, for example, in the imaging apparatus 10, a second reception step and a fourth recording step are executed. The second reception step is an example of a "reception step" according to the present disclosed technology, and the fourth recording step is an example of a "recording step" according to the present disclosed technology.

The second reception step is a step of receiving an instruction of whether or not to record information, which is determined as the information not to be recorded in the first recording region 56A among the plurality of pieces of information included in the accessory information 52, in the first recording region 56A. The fourth recording step is a step of recording information, which is determined as the information not to be recorded in the first recording region 56A among the plurality of pieces of information included in the accessory information 52, in the first recording region 56A in accordance with the instruction received in the second reception step.

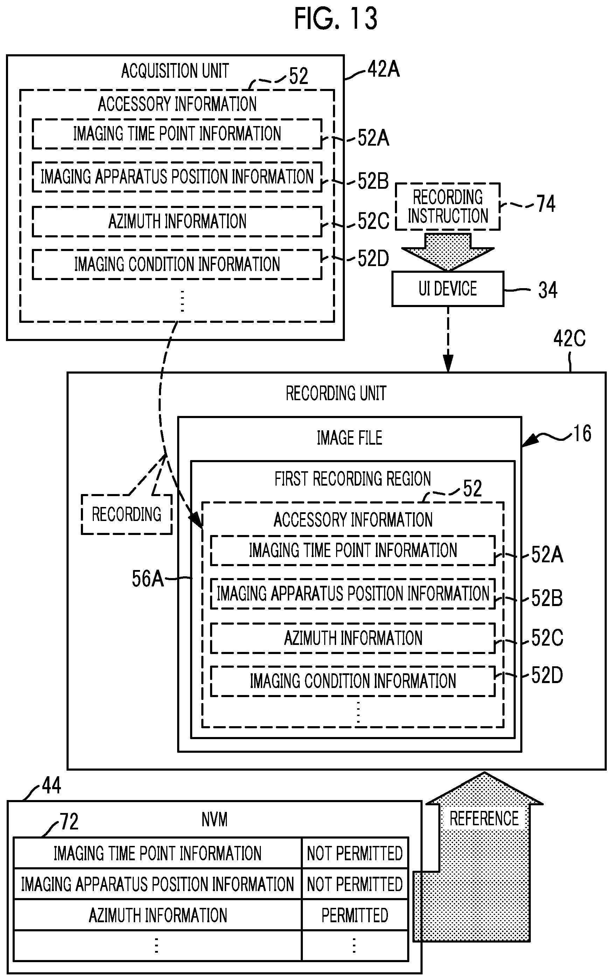

In the example shown in Fig. 13, the NVM 44 stores a reference table 72. The reference table 72 includes information for specifying information for which the recording in the first recording region 56A is permitted and information for which the recording in the first recording region 56A is not permitted among the plurality of pieces of information included in the accessory information 52. Basically, the recording unit 42C selects the plurality of pieces of information included in the accessory information 52 acquired by the acquisition unit 42A in accordance with the reference table 72, and records the selected information in the first recording region 56A. That is, with reference to the reference table 72, the recording unit 42C and does not record the information for which the recording in the first recording region 56A is not permitted, among the plurality of pieces of information included in the accessory information 52 acquired by the acquisition unit 42A, in the first recording region 56A, and records the information for which the recording in the first recording region 56A is permitted in the first recording region 56A.

Here, in a case in which a recording instruction 74, which is an instruction to record the information for which the recording in the first recording region 56A is not permitted in the reference table 72, in the first recording region 56A, is received by the UI device 34, the recording unit 42C records the information for which the recording in the first recording region 56Ais not permitted in the reference table 72, in the first recording region 56A. In the example shown in Fig. 13, in the reference table 72, the recording of the imaging time point information 52A and the imaging apparatus position information 52B in the first recording region 56A is not permitted, but, in a case in which the recording instruction 74 is received by the UI device 34, the recording unit 42C records the imaging time point information 52A and the imaging apparatus position information 52B in the first recording region 56A.

Accordingly, even in a case in which the accessory information 52 (in the example shown in Fig. 13, the imaging time point information 52A and the imaging apparatus position information 52B) is determined as the information not to be recorded in the first recording region 56A, the accessory information 52 can be recorded in the first recording region 56A depending on the user's demand. As a result, the convenience of the image file 16 for the user is improved.

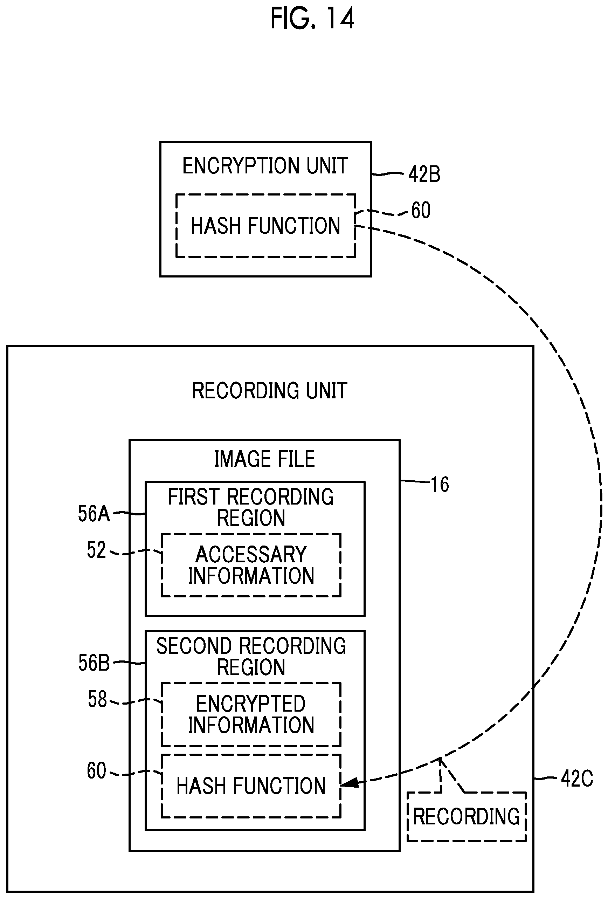

In the above-described embodiment, the form example has been described in which the hash function 60 is not recorded in the second recording region 56B of the image file 16, but the present disclosed technology is not limited to this, and, for example, as shown in Fig. 14, the hash function 60 used for encrypting the accessory information 52 may be recorded in the second recording region 56B by the recording unit 42C.

In the above-described embodiment, the form example has been described in which the encrypted information 58 is recorded in the second recording region 56B of the image file 16, but the present disclosed technology is not limited to this. For example, as shown in Fig. 15, the re-encrypted information 76, which is the information obtained by encrypting the encrypted information 58 (that is, the hash value), may be recorded in the second recording region 56B of the image file 16. Here, the re-encrypted information 76 is an example of "encrypted information" according to the present disclosed technology.

In the example shown in Fig. 15, the encryption unit 42B generates a private key 78 and generates a public key 80 corresponding to the private key 78. The public key 80 is stored in the storage device 82 by the encryption unit 42B. The storage device 82 is a device (for example, a server or a personal computer) that is connected to the imaging apparatus 10 via a network in a communicable manner. The encryption unit 42B generates a uniform resource locator (URL) 84 for specifying a place in which the public key 80 is stored (for example, a place where the public key 80 is stored by the storage device 82). The recording unit 42C records the hash function 60, the re-encrypted information 76, and the URL 84 in the second recording region 56B of the image file 16.

The re-encrypted information 76 recorded in the second recording region 56B is information in which the encrypted information 58 is further encrypted. That is, the re-encrypted information 76 is information in which the accessory information 52 is doubly encrypted. Therefore, it is possible to achieve higher security than in a case in which the accessory information 52 is recorded as it is in the second recording region 56B or the encrypted information 58 is recorded in the second recording region 56B. The user can obtain the public key 80 from the storage device 82 by using the URL 84 recorded in the second recording region 56B. Therefore, it is possible to easily allow a regular user who handles the image file 16 to obtain the public key 80.

Here, although the form example has been described in which the URL 84 is recorded in the second recording region 56B, this is merely an example, and the public key 80 may be recorded in the second recording region 56B. In such a case, the user can quickly obtain the public key 80.

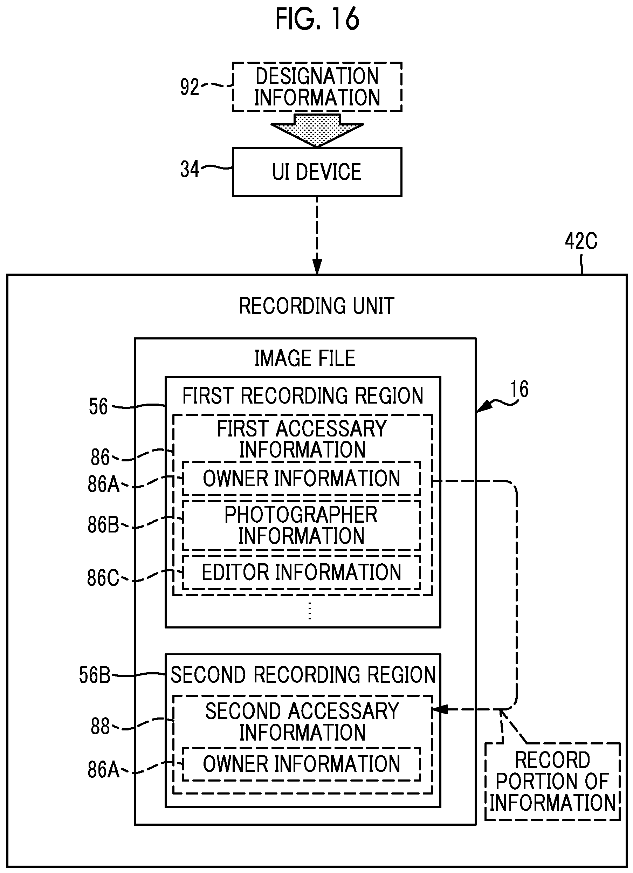

In the above-described embodiment, the accessory information 52 recorded in the first recording region 56A of the image file 16 has been described as an example, but the present disclosed technology is not limited to this, and, for example, as shown in Fig. 16, the present disclosed technology is established even in a case in which a plurality of pieces of accessory information are recorded in the first recording region 56A of the image file 16.

In the example shown in Fig. 16, first accessory information 86 is recorded in the first recording region 56A of the image file 16 as the accessory information. The first accessory information 86 is accessory information relating to an artist, and includes owner information 86A, photographer information 86B, editor information 86C, and the like. The owner information 86 is information relating to an owner of the imaging apparatus 10. The photographer information 86B is information relating to the photographer 14. The editor information 86C is information relating to an editor who edits the image file 16.

The UI device 34 receives designation information 92. The designation information is information for designating the division of a portion of the first accessory information 86 recorded in the first recording region 56A. In a case in which the designation information 92 is received by the UI device 34, the recording unit 42C records derived information (for example, a portion of information designated by the designation information 92 from the owner information 86A, the photographer information 86B, and the editor information 86C) obtained by dividing a portion of a plurality of pieces of information (the owner information 86A, the photographer information 86B, and the editor information 86C) included in the first accessory information 86, in the second recording region 56B. In the example shown in Fig. 16, a portion of the first accessory information 86, that is, the derived information (in the example shown in Fig. 16, the owner information 86A) derived from the first accessory information 86 is recorded in the second recording region 56B as second accessory information 88 by the recording unit 42C. Accordingly, in a case in which the first accessory information 86 recorded in the first recording region 56A includes a plurality of pieces of information, the user can divide the information intended by the user from the first accessory information 86 and record the divided information in the second recording region 56B.

In the example shown in Fig. 16, the form example has been described in which the designated information among the plurality of pieces of information included in the first accessory information 86 is recorded in the second recording region 56B, but the present disclosed technology is not limited to this. For example, the derived information derived from one or more pieces of the designated information among the plurality of pieces of information included in the first accessory information 86 may be recorded in the second recording region 56B.

In the above-described embodiment, the form example has been described in which the accessory information 52 is recorded in the first recording region 56A, but the present disclosed technology is not limited to this. For example, the accessory information 52 is information that is recordable in the first recording region 56A, but may be recorded in the second recording region 56B without being recorded in the first recording region 56A. In addition, the accessory information 52 is information that is recordable in the first recording region 56A, but information derived from the accessory information 52 may be recorded in the second recording region 56B without being recorded in the first recording region 56A. It should be noted that examples of the information that is recordable in the first recording region 56A by the accessory information 52 include information on an item recorded in the first recording region 56A (for example, the APP1 region) in the related art.

In the above-described embodiment, the form example has been described in which the information obtained by encrypting the accessory information 52 as the derived information derived from the accessory information 52 is recorded in the second recording region 56B, but the present disclosed technology is not limited to this. For example, reliability information may be recorded in the second recording region 56B in a state in which the reliability information is associated, as one of pieces of the derived information, with the encrypted information obtained by encrypting the accessory information 52 or the accessory information 52 (hereinafter, also referred to as "recording information"). The reliability information is an example of "derived information" and "recording information" according to the present disclosed technology.

The reliability information refers to information indicating reliability of the recording information. For example, the recording information having a high degree of modification or deletion can be said to be information having low reliability. On the contrary, the recording information of which the degree of modification or deletion is low can be said to be information having high reliability. The reliability of the recording information is affected by a source of the recording information. That is, the source of the recording information can be one of indicators for the user or the like of the image file 16 to determine the reliability of the recording information.

For example, in a case in which the source of the recording information is a source having high security (for example, a source in which modification, deletion, or the like of the recording information is difficult), the user or the like of the image file 16 can determine that the reliability of the recording information is also high, and, in a case in which the source of the recording information is a source having low security (for example, a source in which modification, deletion, or the like of the recording information is easy), the user or the like of the image file 16 can determine that the reliability of the recording information is also low.

Examples of the source having high security include a network. Examples of the source having lower security than the network (that is, a source with which a third party is more likely to intervene than the network) include the UI device 34 or a read/write memory (for example, the NVM 44). In such a case, the recording information obtained by manual input or the recording information obtained from the read/write memory can be said to be recording information having lower reliability than the recording information obtained through the network. Therefore, examples of the reliability information include information relating to whether or not the recording information is information obtained through the network. As described above, in a case in which the reliability information is recorded in the second recording region 56B in a state of being associated with the recording information as one of the pieces of the derived information, the security of the recording information can be improved, and, as a result, the security of the image file 16 is improved.

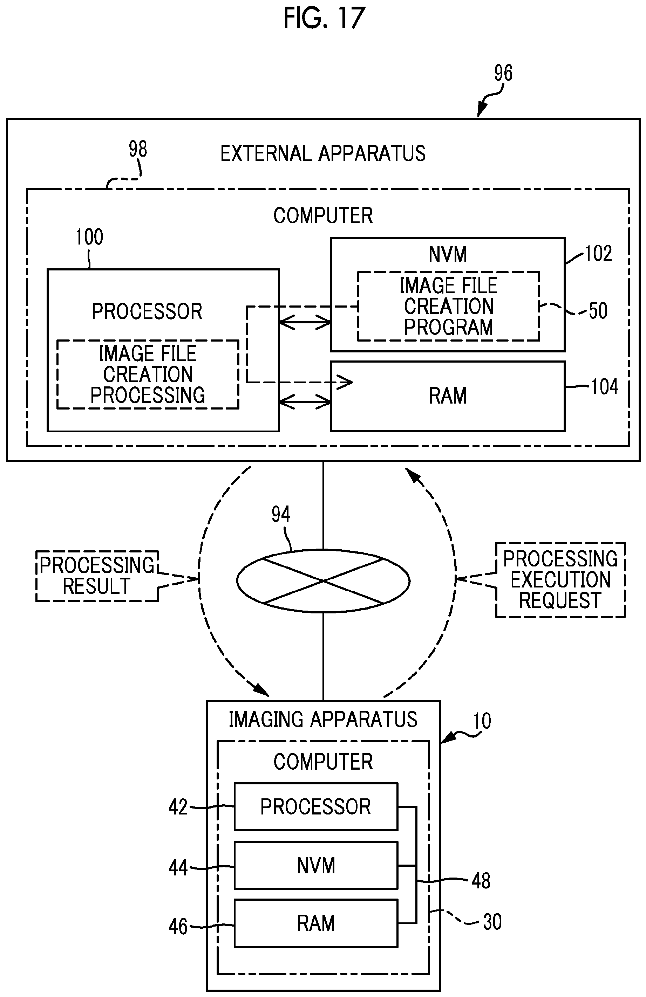

In the above-described embodiment, the form example has been described in which the image file creation processing is executed by the computer 30 in the imaging apparatus 10, but the present disclosed technology is not limited to this. For example, as shown in Fig. 17, the image file creation processing may be executed by a computer 98 in an external apparatus 96 connected to the imaging apparatus 10 via a network 94 in a communicable manner. Examples of the computer 98 include a server computer for cloud service. The computer 98 is an example of an "image file creation apparatus" and a "computer" according to the present disclosed technology.

In the example shown in Fig. 17, the computer 98 comprises a processor 100, an NVM 102, and a RAM 104. The NVM 102 stores the image file creation program 50.

The imaging apparatus 10 requests the external apparatus 96 to execute the image file creation processing via the network 94. In response to this request, the processor 100 of the external apparatus 96 reads out the image file creation program 50 from the NVM 102 and executes the image file creation program 50 on the RAM 104. The processor 100 performs the image file creation processing in accordance with the image file creation program 50 executed on the RAM 104. Then, the processor 100 provides a processing result obtained by executing the image file creation processing to the imaging apparatus 10 via the network 94.

Although Fig. 17 shows the form example in which the external apparatus 96 executes the image file creation processing, this is merely an example. For example, the imaging apparatus 10 and the external apparatus 96 may execute the image file creation processing in a distributed manner, or a plurality of apparatuses including the imaging apparatus 10 and the external apparatus 96 may execute the image file creation processing in a distributed manner.

Examples of the data structure of the image file 16 described in the above-described embodiment include, as shown in Fig. 18, a data structure of a joint photographic experts group (JPEG) file corresponding to Exif version 3.0 (Exif 3.0). Here, the JPEG file has been described, but this is merely an example, and the image file is not limited to the JPEG file.

In JPEG XT Part 3, which is a type of JPEG, marker segments "APP1 region" and "APP11 region" are provided as regions to which additional information can be added. Tag information relating to an imaging date and time, an imaging location, the imaging condition, and the like of the image data 18 is stored in "APP1". The "APP11" includes a box of a JPEG universal metadata box format (JUMBF) (specifically, for example, boxes of JUMBF1 and JUMBF2) that is a storage region of the metadata. In the box of the JUMBF1, there is a Content Type box in which the metadata is stored, and text information can be described in the region in a JSON format. The format for describing the metadata is not limited to the JSON format, and may be an extensible markup language (XML) format. Further, in the box of the JUMBF2, information different from that in the box of JUMBF1 can be described in Content Type box. In the JPEG file, about 60000 JUMBF boxes described above can be created.

In addition, in the data structure of Exif 3.0, the region (for example, the APP11 region) to which the additional information can be added is expanded as compared with an old version of Exif 2.32, and, specifically, a box region conforming to the JUMBF is added. A plurality of hierarchies may be set in the box region, and, in this case, the additional information may be stored (that is, written) by changing the contents or abstraction of the information in accordance with a rank of the hierarchy. For example, a type of the subject shown in the image data 18 may be written in a higher hierarchy, and a state, an attribute, or the like of the subject may be written in a lower hierarchy. As described above, the APP11 region, which is an example of the second recording region 56B, is a region in which the degree of freedom of description is higher than that of the APP1 region, which is an example of the first recording region 56A, and is suitable for recording a plurality of pieces of accessory information designated by the user.

In the above-described embodiment, the form example has been described in which the image file creation program 50 is stored in the NVM 44, but the present disclosed technology is not limited to this. For example, the image file creation program 50 may be stored in a portable computer-readable non-transitory storage medium such as a solid-state drive (SSD), a USB memory, or a magnetic tape. The image file creation program 50, which is stored in the non-transitory storage medium, is installed in the imaging apparatus 10. The processor 42 executes the image file creation processing in accordance with the image file creation program 50.

In addition, the image file creation program 50 may be stored in a storage device of another computer, server apparatus, or the like connected to the imaging apparatus 10 via a network, and the image file creation program 50 may be downloaded in response to a request of the imaging apparatus 10 and installed in the imaging apparatus 10.

It is not necessary to store the entire image file creation program 50 in the storage device of another computer, server apparatus, or the like connected to the imaging apparatus 10, or the NVM 44, and a portion of the image file creation program 50 may be stored.

Although the computer 30 is built in the imaging apparatus 10 shown in Fig. 2, the present disclosed technology is not limited to this, and, for example, the computer 30 may be provided outside the imaging apparatus 10.

In the above-described embodiment, although the form example has been described in which the present disclosed technology is implemented by the software configuration, the present disclosed technology is not limited to this, and a device including an application-specific integrated circuit (ASIC), a field-programmable gate array (FPGA), or a programmable logic device (PLD) may be applied. A combination of the hardware configuration and the software configuration may be used.

As a hardware resource for executing the image file creation processing described in the above-described embodiment, various processors shown below can be used. Examples of the processor include a CPU which is a general-purpose processor functioning as the hardware resource for executing the image file creation processing by executing software, that is, a program. Examples of the processor also include a dedicated electronic circuit that is a processor whose dedicated circuit configuration is specially designed to execute specific processing, such as an FPGA, a PLD, or an ASIC. The memory is built in or connected to any processor, and any processor executes the image file creation processing using the memory.

The hardware resource for executing the image file creation processing may be configured by one of these various processors, or may be configured by a combination (for example, a combination of a plurality of FPGAs or a combination of the CPU and the FPGA) of two or more processors of the same type or different types. The hardware resource for executing the image file creation processing may be one processor.

As a configuring example of one processor, first, there is a form in which one processor is configured by a combination of one or more CPUs and software and the processor functions as the hardware resource for executing the image file creation processing. Second, as indicated by a system-on-a-chip (SoC) or the like, there is a form in which a processor that implements the functions of the entire system including a plurality of hardware resources executing the image file creation processing with one integrated circuit (IC) chip is used. As described above, the image file creation processing is implemented by using one or more of the various processors as the hardware resources.

Further, specifically, an electronic circuit in which circuit elements, such as semiconductor elements, are combined can be used as the hardware structure of these various processors. The image file creation processing described above is merely an example. Therefore, it goes without saying that unnecessary steps may be deleted, new steps may be added, and the processing order may be changed within a range that does not deviate from the scope.

It should be noted that, although the image file creation processing performed by the imaging apparatus 10 has been described, the same applies to image file creation processing performed by a reception apparatus 24.

The above-described contents and the above-shown contents are detailed descriptions of portions relating to the present disclosed technology and are merely examples of the present disclosed technology. For example, the description of the configuration, the function, the operation, and the effect above are the description of examples of the configuration, the function, the operation, and the effect of the parts according to the present disclosed technology. As a result, it goes without saying that unnecessary parts may be deleted, new elements may be added, or replacements may be made with respect to the above-described contents and the above-shown contents within a range that does not deviate from the gist of the present disclosed technology. Further, the description of, for example, common technical knowledge that does not need to be particularly described to enable the implementation of the present disclosed technology is omitted in the above-described contents and the above-shown contents in order to avoid the confusion and to facilitate the understanding of the portions relating to the present disclosed technology.

In the present specification, the grammatical concept of "A or B" includes the concept synonymous with "at least one of A or B", in addition to the concept of "any one of A or B". That is, "A or B" includes meaning of only A, only B, or a combination of A and B. In the present specification, the same concept as "A or B" also applies to a case in which three or more matters are expressed by association with "or".

All of the documents, the patent applications, and the technical standards described in the present specification are incorporated into the present specification by reference to the same extent as in a case in which each of the documents, the patent applications, and the technical standards are specifically and individually stated to be described by reference.

In regard to the above-described embodiment, the supplementary notes will be further disclosed as follows.

### (Supplementary Note 1)

An image file creation method including: an acquisition step of acquiring recording information including accessory information that is recordable in a first recording region of an image file or derived information that is derived from the accessory information; and a recording step of recording the recording information in a second recording region of the image file.

### (Supplementary Note 2)

The image file creation method according to supplementary note 1, in which the accessory information is recorded in the first recording region, and the recording information includes the accessory information.

### (Supplementary Note 3)

The image file creation method according to supplementary note 2, further including: a reception step of receiving whether or not to record the accessory information in the first recording region, in which, in the recording step, the accessory information is recorded in the first recording region in a case in which a recording instruction is received by the reception step.

### (Supplementary Note 4)

The image file creation method according to supplementary note 3, in which, in the reception step, whether or not to record the accessory information that is determined as information not to be recorded in the first recording region, in the first recording region is received.

### (Supplementary Note 5)

The image file creation method according to any one of supplementary notes 1 to 4, in which the recording information includes the derived information.

### (Supplementary Note 6)

The image file creation method according to any one of supplementary notes 1 to 5, in which the derived information is encrypted information obtained by encrypting the accessory information.

### (Supplementary Note 7)

The image file creation method according to supplementary note 6, in which the encrypted information is a hash value or information obtained by encrypting the hash value.

### (Supplementary Note 8)

The image file creation method according to any one of supplementary notes 1 to 7, in which the derived information is information obtained by dividing the accessory information.

### (Supplementary Note 9)

The image file creation method according to any one of supplementary notes 1 to 8, in which the derived information is history information relating to a change history of the accessory information.

### (Supplementary Note 10)

The image file creation method according to any one of supplementary notes 1 to 9, in which, in the recording step, timing information relating to a timing at which the recording information is recorded in the second recording region is recorded.

### (Supplementary Note 11)

The image file creation method according to any one of supplementary notes 1 to 10, in which, in the recording step, a portion of the recording information designated from among a plurality of pieces of the recording information is recorded in the second recording region.

### (Supplementary Note 12)

The image file creation method according to any one of supplementary notes 1 to 11, in which the first recording region is a region in which information in a binary format is recorded, and the second recording region is a region in which information in a text format is recorded.

### (Supplementary Note 13)

The image file creation method according to any one of supplementary notes 1 to 12, in which the image file is a format file in a JPEG format, the first recording region is an APP1 region of the format file, and the second recording region is a region of the format file other than the APP1 region of the format file.

## Claims

1. An image file creation method comprising:
an acquisition step of acquiring recording information including accessory information that is recordable in a first recording region of an image file or derived information that is derived from the accessory information; and
a recording step of recording the recording information in a second recording region of the image file.

2. The image file creation method according to claim 1,
wherein the accessory information is recorded in the first recording region, and
the recording information includes the accessory information.

3. The image file creation method according to claim 2, further comprising:
a reception step of receiving whether or not to record the accessory information in the first recording region,
wherein, in the recording step, the accessory information is recorded in the first recording region in a case in which a recording instruction is received by the reception step.

4. The image file creation method according to claim 3,
wherein, in the reception step, whether or not to record the accessory information that is determined as information not to be recorded in the first recording region, in the first recording region is received.

5. The image file creation method according to claim 1,
wherein the recording information includes the derived information.

6. The image file creation method according to claim 1,
wherein the derived information is encrypted information obtained by encrypting the accessory information.

7. The image file creation method according to claim 6,
wherein the encrypted information is a hash value or information obtained by encrypting the hash value.

8. The image file creation method according to claim 1,
wherein the derived information is information obtained by dividing the accessory information.

9. The image file creation method according to claim 1,
wherein the derived information is history information relating to a change history of the accessory information.

10. The image file creation method according to any one of claims 1 to 9,
wherein, in the recording step, timing information relating to a timing at which the recording information is recorded in the second recording region is recorded.

11. The image file creation method according to claim 1,
wherein, in the recording step, a portion of the recording information designated from among a plurality of pieces of the recording information is recorded in the second recording region.

12. The image file creation method according to claim 1,
wherein the first recording region is a region in which information in a binary format is recorded, and
the second recording region is a region in which information in a text format is recorded.

13. The image file creation method according to claim 1,
wherein the image file is a format file in a JPEG format,
the first recording region is an APP1 region of the format file, and
the second recording region is a region of the format file other than the APP1 region of the format file.

14. An image file comprising:
a first recording region in which accessory information is recordable; and
a second recording region,
wherein recording information including the accessory information or derived information that is derived from the accessory information is recorded in the second recording region.

15. An image file creation apparatus comprising:
a processor,
wherein the processor is configured to:
acquire recording information including accessory information that is recordable in a first recording region of an image file or derived information that is derived from the accessory information; and
record the recording information in a second recording region of the image file.

16. A program causing a computer to execute a process comprising:
an acquisition step of acquiring recording information including accessory information that is recordable in a first recording region of an image file or derived information that is derived from the accessory information; and
a recording step of recording the recording information in a second recording region of the image file.
